# EUROPEAN PATENT SPECIFICATION

(11) **EP 1 164 766 B1**
(45) Date of publication and mention of the grant of the patent: **15.02.2006**
(21) Application number: 01113614.0
(22) Date of filing: 15.06.2001
(51) Int. Cl.: H04L 29/06

(54) **Switch connection control apparatus for channels**
Steueranordnung für Kanalverbindungen
Dispositif de contrôle de connections de commutation

(30) Priority: 16.06.2000 JP 2000182015
(43) Date of publication of application: 19.12.2001
(73) Proprietor: Ionos Co., Ltd., Tokyo (JP)
(72) Inventor: Hoshino, Hirokazu, Setagaya-ku, Tokyo (JP)
(74) Representative: Modiano, Micaela Nadia

(56) References cited:
- WO-A-97/16782
- WO-A-99/42915
- US-A- 6 026 502

## Description

### BACKGROUND OF THE INVENTION

### 1. Field of the Invention

The present invention relates to an effective technology applied to a security in a network.

### 2. Description of the Related Art

The spread of the internet makes the base of business forms change. At the present when data centers and provider businesses as well as end users are always connected to the internet, crimes due to an unlawful access extensively increase. Now, the introduction of securities is required for government organizations, personals and so on.

In order to prevent an access to an internal network (intranet) from an external network (internet or the like), a fire wall technology has been known.

In the conventional security such as the fire wall, all of terminals and systems are connected to each other through one line physically or logically, and an adequacy is logically judged on the basis of the fire wall.

In the conventional network security technology, because all of terminals and systems are connected to each other by one line physically or logically, there arises such a problem that unjust intrusion can be made.

In order to cope with this problem, separating the internal network from the external network is the most safety. In other words, even in any situation (destroy, attack or the like), because the external network and the internal network are not connected to each other through one line, the unjust intrusion can be prevented.

However, if an access to the internal network from the external network or an access to the external network from the internal network is completely shut down, the mutual flexible operation of the networks cannot be made.

That is, the physical separation of the external network and the internal network may lead to a fear that the real time property and the bidirectivity are deteriorated.

The U.S. Patent No. 6,026,502 discloses an apparatus for preventing hackers or viruses of invading a selected server comprising switching means on the input and output sides of buffers and means for controlling the switching means.

### SUMMARY OF THE INVENTION

The present invention has been made under the above circumstances, and therefore an object of the present invention is to enable the flexible cooperation of an internal internet with an external internet while preventing a direct intrusion to the internal network by physical means with respect to the access from the external network.

The above object has been achieved by the provision of a switch connection control apparatus as defined by independent claim 1.

Another object of the present invention is to provide a security system that prevents an unjust intrusion by using a seesaw type switching technology in terminals and systems which are dispersed for the respective purposes.

According to the present invention, because the external network and the internal network are physically separated in accordance with a control signal of an access request depending on a purpose through the seesaw type switching technology, data can be surely protected from unjust acts.

Also, according to the present invention, because the external network and the internal network are separated in accordance with the control signal of the access request depending on the purpose, data can be transmitted and received between the external network and the internal network without damaging the real time property or the bidirectivity.

### BRIEF DESCRIPTION OF THE DRAWINGS

These and other objects and advantages of this invention will become more fully apparent from the following detailed description taken with the accompanying drawings in which:
Fig. 1 is a block diagram showing the principle structure of the present invention;
Fig. 2 a block diagram showing the principle structure of the present invention;
Fig. 3 is a block diagram showing the principle structure of the present invention;
Fig. 4 is a block diagram showing the principle structure of the present invention;
Fig. 5 is a functional block diagram showing the details in accordance with an embodiment;
Fig. 6 is a diagram showing the structure of a seesaw switching box (SSWB) and a truth table in accordance with an embodiment;
Fig. 7 is an explanatory diagram showing the operation of a connection control apparatus in accordance with an embodiment;
Fig. 8 is an explanatory diagram showing the operation of a connection control apparatus in accordance with another embodiment;
Fig. 9 is an explanatory diagram showing the operation of a connection control apparatus in accordance with still another embodiment;
Fig. 10 is an explanatory diagram showing the operation of a connection control apparatus in accordance with yet another embodiment;
Fig. 11 is a systematic diagram showing an applied example of an embodiment;
Fig. 12 is a systematic diagram showing an applied example of an embodiment;
Fig. 13 is a flowchart showing a procedure of shifting from an external communication mode to an internal communication mode;
Fig. 14 is a flowchart showing a procedure of shifting from an internal communication mode to an external communication mode; and
Fig. 15 is a timing chart of the connection control apparatus in accordance with the embodiment.

### DETAILED DESCRIPTION OF THE PREFERRED EMBODIMENTS

Now, a description will be given in more detail of preferred embodiments of the present invention with reference to the accompanying drawings.

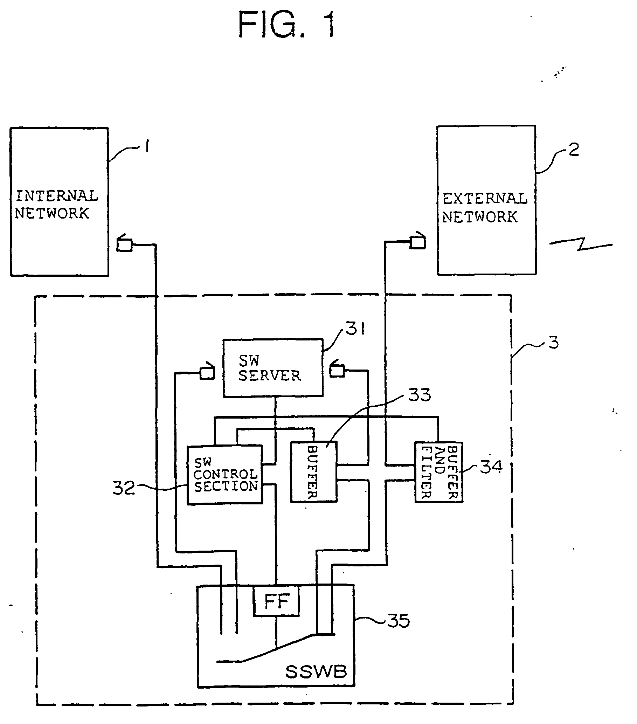

Fig. 1 is a functional block diagram showing the concept of the present invention.

As shown in Fig. 1, terminals and systems for the respective purposes are classified and dispersed into the following three.

In the figure, reference numeral 1 denotes an internal network that possesses important data and a system which is made up of a general purpose network connected to a computer system on a communication line. In the present specification, the internal network is directed to a system having a terminal or a network which is not connected to the above-mentioned wire or an outer line including wireless.

In the figure, reference numeral 2 denotes an external network. In the present specification, the external network is directed to a network, a system having the network or a network structural part such as a terminal or a modular jack which is connected to an internet network, a public network, a wire such an exclusive line or an outer line including wireless.

Reference numeral 3 denotes a control terminal (seesaw type switching security system) for controlling the internal network and the external network, which is the most important element of the present invention.

The control terminal 3 is made up of a switch server 31, a switch control section 32, a buffer 33, a buffer 34 and a seesaw switching box (SSWB) 35. The respective functional sections of those members will be described in more detail later.

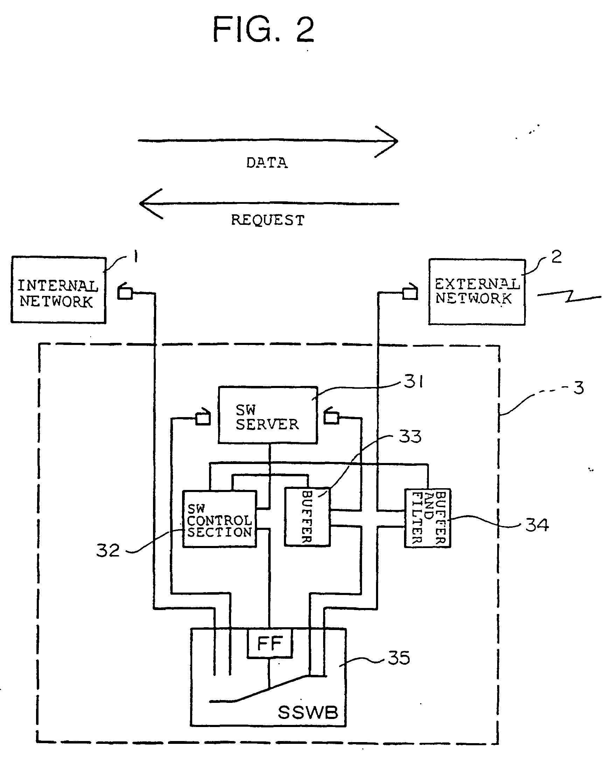

In the system as described in Fig. 2, the control terminal 3 has a function of receiving a request from the external network and transmitting the request to the internal network. Also, the control terminal 3 has a function of receiving data of the internal network and transmits the data to the external network. In the figure, the seesaw switching box (SSWB) 5 is in a state where the buffer 34 and the buffer 33 are connected to each other in order to transmit the request signal from the external network 2 to the internal network 1.

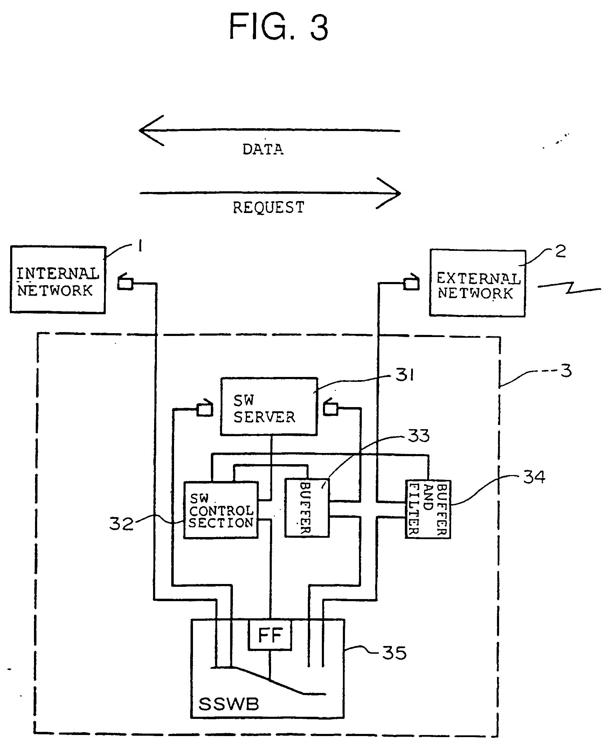

Also, the control terminal 3 has a function of receiving a request from the internal network and transmitting the request to the external network as described in Fig. 3. Also, the control terminal 3 has a function of receiving data of the external network and transmitting the data to the internal network. In the figure, the seesaw switching box (SSWB) 5 is in a state where the internal network 1 and the switch server 31 are connected to each other in order to transmit the request signal from the internal network 1 to the external network 2.

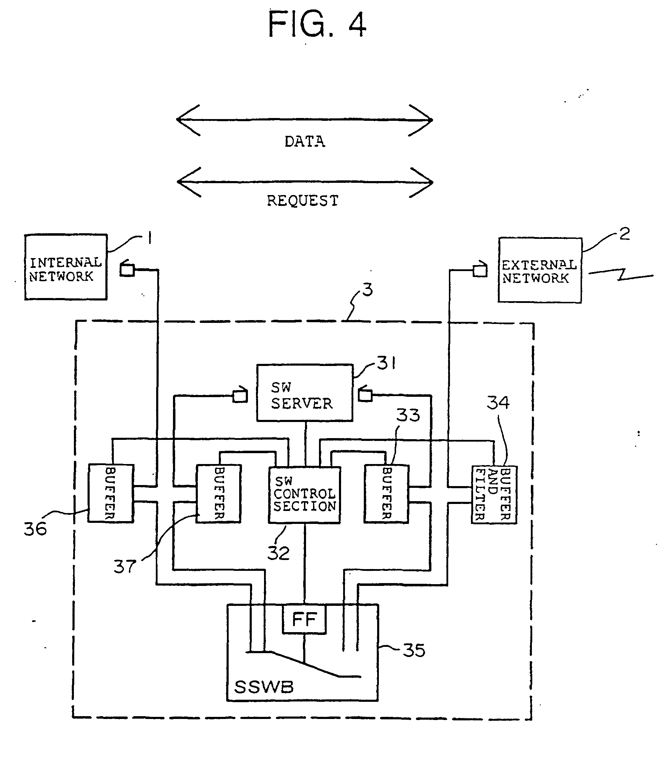

The control terminal 3 is also capable of transmitting and receiving the request signal and the data signal bidirectionally in both of the internal network 1 and the external network 2 as described in Fig. 4.

In the case of using the control terminal 3 in the above bi-directional mode, it is possible that a buffer 37 is interposed between the switch server 31 and the seesaw switching box (SSWB) 35, and a buffer 36 is interposed between the internal network 1 and the seesaw switching box (SSWB) 35 so that the interior of the control terminal 3 is laterally symmetrical with respect to the internal network 1 and the external network 2. In this case, the buffer 36 holds the request from the internal network until the external side switch (SW2) is closed. Also, the buffer 36 has a filtering function of judging whether unjust data exists in the request from the internal network, or not, and discarding the request if the unjust data is detected.

The buffer 37 has a function of holding the data, which is received from the external network 2 by the switch server 31 and then appropriately processed, until the internal side switch (SW2) is closed.

The other operation of the control terminal 3 is identical with that described in the above-mentioned Figs. 2 and 3, and therefore its description will be omitted.

The structure that the interior of the control terminal 3 is laterally symmetrical is shown in only Fig. 4. However, such a structure is applicable to even a case where the control terminal 3 is used in any mode.

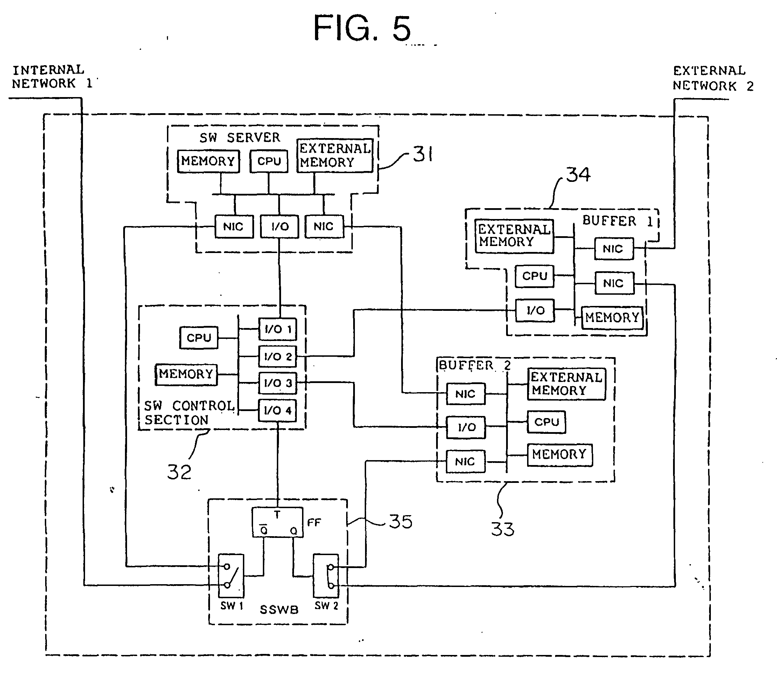

Subsequently, a description will be given of the structures, the functions and the operation of the respective units in an object dispersion type unit (units dispersed depending on the respective purposes) in accordance with this embodiment with reference to Fig. 5.

The switch server 31 is made up of a computer system which is formed of a bus as a main part, a central processing unit (CPU), a memory, an external memory, an interface (I/O) and so on. Program is installed in the external memory, and the central processing unit- (CPU) is so designed as to load the program in the memory and sequentially execute the program, to thereby output the control command signal of the seesaw switching box (SSWB) 35 to the switch control section 32.

In other words, the switch server 31 conducts processing responsive to the purpose of, for example, requesting necessary data to the internal network in response to the request from the external network, and trying to make the data received from the internal network consistent with the request from the external network. Also, the switch server 31 transmits to the switch control section 32 a control signal for exclusively switching the respective gates (SW1 and SW2) of the external network side and the internal network side on the basis of the request or a signal such as data.

The switch control section 32 is made up of a plurality of interfaces (I/O) mainly with the central processing unit (CPU) and the memory. In other words, the switching control section 32 is so designed as to control the seesaw switching box (SSWB) 35 on the basis of the control command signal from the switch server 31.

The switch control section 32 is completely out of contact with a data signal path on the network, and monitors the switch server 31, the buffer 34, the buffer 33 and the seesaw switching box (SSWB), respectively, so as to manage the state of the unit.

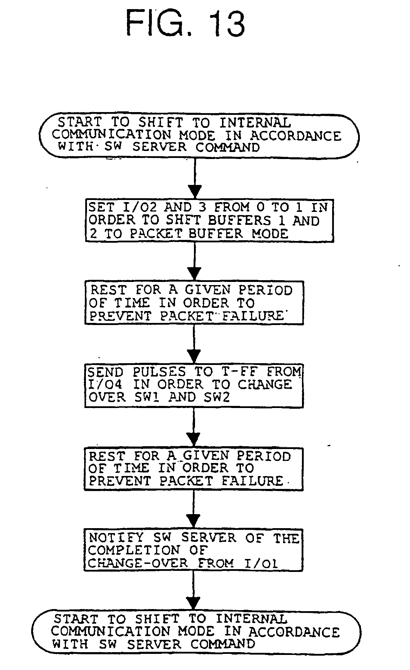

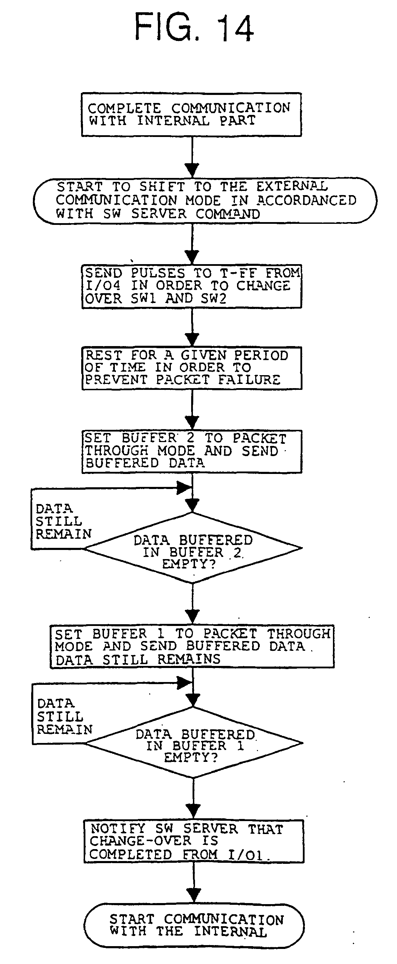

Then, the switch control section 32 transmits a control signal related to the respective mode changes to the buffers 34 and 33 on the basis of the information from the switch server 31 or the like (refer to Figs. 13 and 14).

Also, the switch control section 32 transmits the mode state signals of the buffers 34 and 33 to the switch server 31. Also, the switch control section 32 receives a switch change-over control signal from the switch server 31 to the seesaw switching box (SSWB) 35, judges the adequacy with respect to the mode states of the buffers 34 and 33, and transmits the switch change-over control signal to the seesaw switching box (SSWB).

The buffers 33 and 34 are substantially identical in structure with each other, but they are different in that the buffer 34 is connected in series to the external network, and in that the buffer 33 is interposed between the seesaw switching box (SSWB) 35 and the switch server 31.

The buffer 34 holds the request from the external network until the external side switch (SW2) is closed. Also, the buffer 34 has a filtering function of judging whether unjust data exists in the request from the external network, or not, and discarding the request upon the detection of the unjust data.

The buffer 33 has a function of holding the data, which is received from the internal network by the switch server 31 and appropriately processed, until the external side switch (SW2) is closed.

The seesaws switching box (SSWB) 35 is made up of a flip flop element (FF) and switches (SW1, SW2), and controls any one of those switches 1 and 2 in a short-circuiting state in accordance with the value of a command signal T from the switch control section 32 which is inputted to the flip flop element (FF).

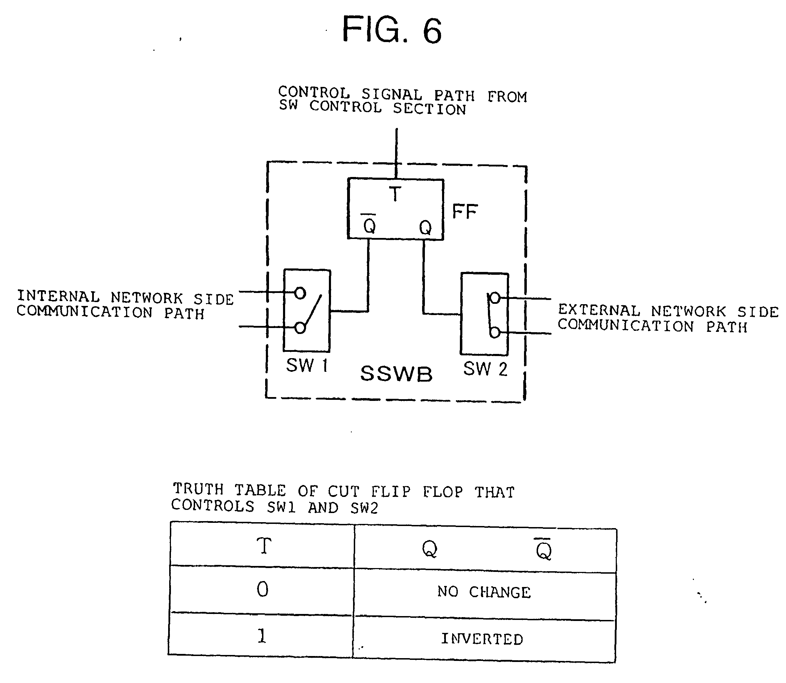

That is, the seesaw switching box (SSWB) 35 has a function of receiving the control signal from the switch control section 32 and exclusively changing over the switches (SW1 and SW2) at the external network 2 side and the internal network 1 side due to the operation of the flip flop (FF). Regarding this matter, the operation algorithm of the seesaw switching box (SSWB) is described with the truth table in Fig. 6.

As described above, in this embodiment, the above-described respective units have the respective distinct roles and are independent from each other and dispersed, thereby being capable of protecting important data fromcracking act or the unjust intrusion. In particular, because the switch control section 32 is completely out of the data signal path on the network, even if the switch server 31 or the buffers 33 and 34 are cracked, such crack is detected, thereby being capable of controlling the seesaw switching box (SSWB).

If the switch server 31 and the buffers 33, 34 are brought in duplex structure by using the above control method, an enhanced security system that automatically changes over from the cracked unit to a preliminary unit can be structured.

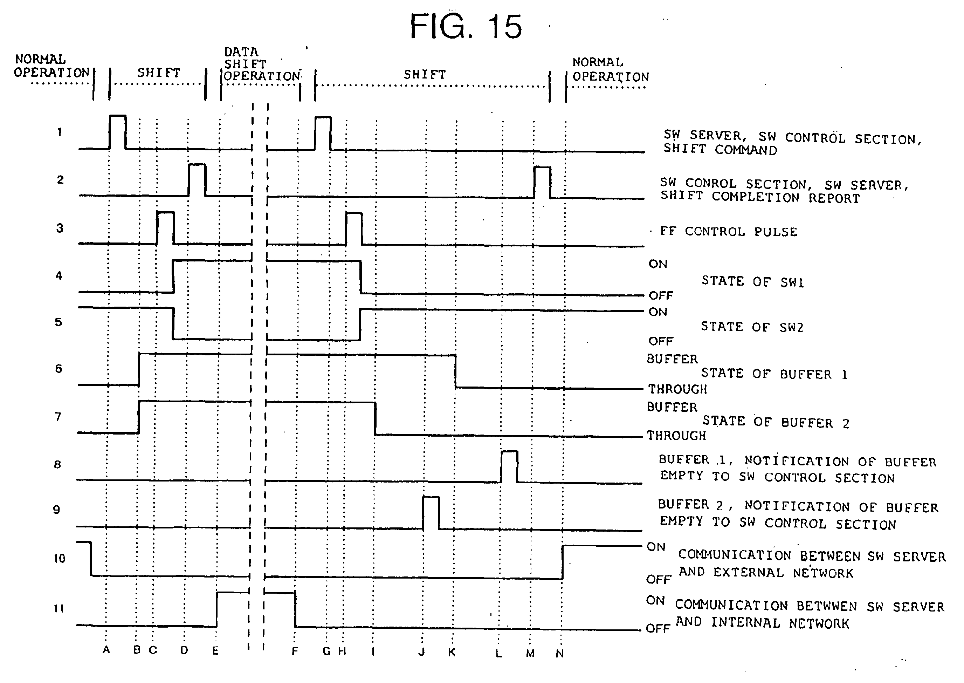

In an actual application, a timing at which the switch server 31 outputs the operation mode change-over command (a timing chart in Fig. 15) has the following proposed patterns.
(1) change over in a time zone where the number of requests to the switch server is small.
   The time zone during which the number of requests is small is searched on the basis of the access state to the switch server 31, and a fact that an external request is not received by the switch server during that time zone is notified the user of, and communication with the internal network is conducted during that time zone.
(2) change over periodically
   In the case where there is no time zone where the requests are interrupted, connection changes over from the external to the internal for each of previously designated time. A time required for communication with the internal per once is reduced by increasing the number of times of change-over, thereby being capable of reducing a delay of the request from the external network of the user.
(3) change over for each request from the user
   For example, at the time of an application where the user would like to look at information on a specific individual among the individual information stored in the internal network, the connection changes over every time the individual information is inquired. The information can be protected by transmitting only the required minimum information to the external network side.

The above controls (1) to (3) are conducted on the basis of the program installed in the memory of the switch server 1.

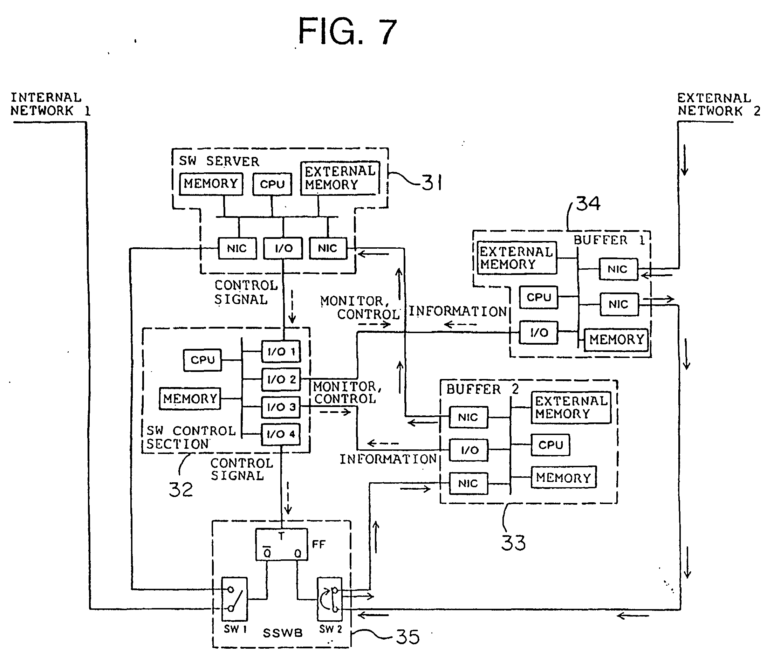

Then, the operation of this system will be described with reference to Figs. 7 to 10.

Because only any one of the switch (SW2) at the external network 2 side and the switch (SW1) at the internal network 1 side is physically closed within the system (SWSEC) (non-short-circuiting structure), even if the switch control command that controls the switching operation of the SWSEC system or the information receiving and originating server (switch server 31 in this embodiment) is cracked, the internal network and the external network are not electrically rendered conductive.

Also, for the respective units (the switch server 31, the buffer 34 and the buffer 33), control and monitor mechanism (switch control section 32 in this embodiment) which is completely out of the data signal path on the network is arranged, and the switch control is conducted, whereby the control from the external due to the cracking is not accepted.

In this example, the timing at which the switch 35 is controlled is not switched by the SWSEC system in the autonomic manner, but the switch server 31 outputs the control instruction, thereby being capable of conducting the switching even if there is no request from the external network 2. In the case where there is a request while the internal network is disconnected to the external network 2 by switching, the request is stored in the buffer 34, and when the connection of the SWSEC system changes over to the external network 2 side, the request is transmitted to the switch server 31 from the buffer 34.

In the case where the connection of the switch server 31 and the external network 2 continues without any interruption, a period of time where the external network 2 is connected to the internal network 1 is periodically provided, and the data to be protected is transmitted to the internal network 1. The data to be originated from the switch server 31 during transmission is stored in the buffer 33. Also, in the case where the amount of data to transmit is large, an information server (not shown) in which information other than the information to be protected is disposed at the external network side, thereby being capable of always receiving the request to the information which may not be protected.

Then, the operation will be described.

When a request is made to the internal network 1 from the external network 2 side, the request signal is stored in the buffer 34.

In this situation, the central processing unit (CPU) within the buffer 34 judges whether the request is unjust or adequate by using filter program installed in the external memory, and if it is unjust, the request is discarded.

Then, if it is a packet buffer mode indicating that the switch (SW2) of the seesaw switching box (SSWB) is in a disconnected (open) state, that is, in a state where the internal network 1 and the switch server 31 conduct data communication, the request is stored in the buffer 34, and waiting is made until it becomes a packet through mode indicating that the switch (SW2) of the seesaw switching box (SSWB) is connected where the internal network 1 and the switch server 31 completes the data communication.

When the internal network 1 and the switch server 31 complete the data communication, the switch server 31 outputs to the switch control section 32 a control signal for changing over the connection of the switch of the seesaw switching box (SSWB) 35 from the switch (SW1) to the switch (SW2). Upon receiving the control signal, the switch control section 32 monitors whether the states of the buffer 34 and the buffer 33 is in the packet buffer mode or the packet through mode, and if it is the packet buffer mode, the switch control section 32 sends out a control signal for setting the mode to the packet through mode to the buffers 34 and 33, respectively. Then, upon receiving the control signal indicative of a notice that the mode was changed to the packet through mode from the buffers 34 and 33, respectively, the switch control section 32 sends out a control signal for changing over the connection of the switch from SW1 to SW2 to the seesaw switching box (SSWB). Also, if it is the packet through mode, the switch control section 32 sends out a control signal for changing over the connection of the switch from SW1 to SW2 to the seesaw switching box (SSWB) 35.

The above request is inputted to the switch server 31 (switching control and information receiving and originating server) through the switch (SW2) of the seesaw switching box (SSWB) and the buffer 33.

In the switch server 31, the central processing unit (CPU) judges the adequacy and the purpose of the request thus inputted by using filter program, and if the request is unjust, the central processing unit discards the request.

If the request is adequate, the central processing units transmits a control signal for changing over the connection of the switch of the seesaw switching box (SSWB) 35 from SW2 to SW1 to the switch control section 32.

Upon receiving the control signal, the switch control section 32 sends out a control signal for setting the states of the buffer 34 and the buffer 33 to the packet buffer mode to the buffers 34 and 33, respectively. Then, upon receiving a control signal indicative of a notice that the states are changed to the packet buffer mode from the buffers 34 and 33, respectively, the central processing unit sends out a control signal for changing over the connection of the switch from SW2 to SW1 to the seesaw switching box (SSWB) 35.

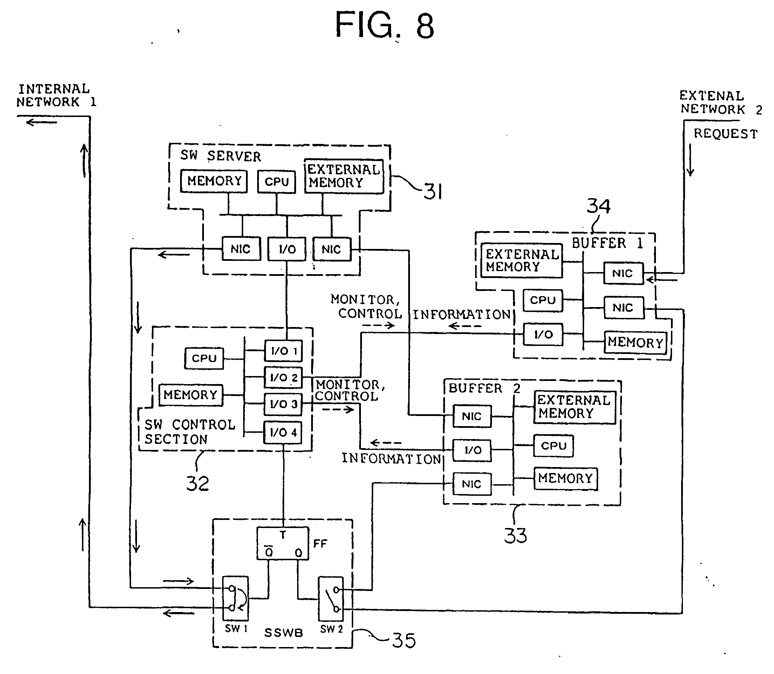

Then, when the seesaw switching box (SSWB) 35 receives the control signal transmitted from the switch control section 32, the central processing unit changes over the connection of the switch from SW2 to SW1 due to the operation of the flip flop (FF) (refer to Fig. 8).

The switch server 31 sends out a request that is suited to the purpose to the internal network 1 side.

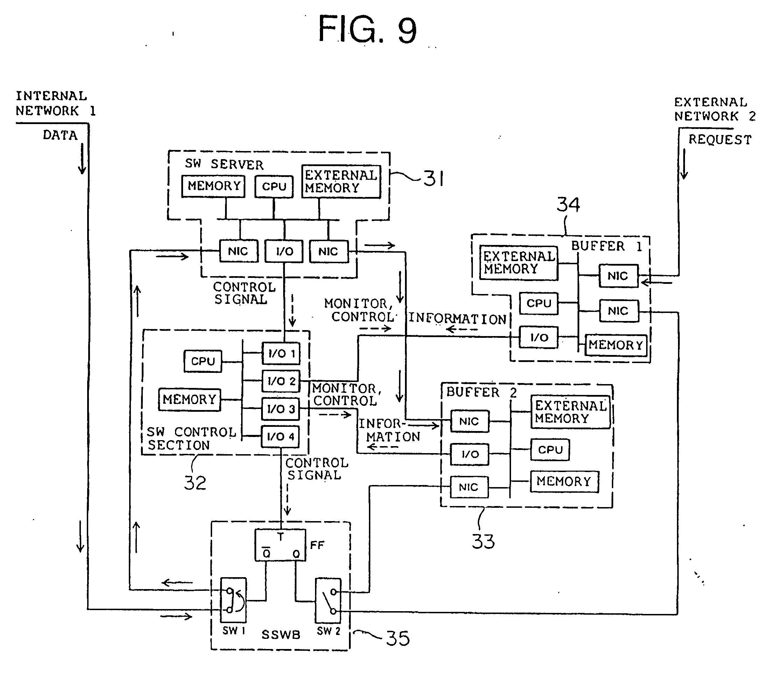

Then, as shown in Fig. 9, the internal network 1 sends out data in response to the request sent from the switch server 31.

The data is transmitted to the switch server 31 through the switch (SW1) of the short-circuiting state of the seesaw switching box (SSWB).

The switch server 31 forms the data in an appropriate format that is suited to the purpose. The formation of data is conducted by the central processing unit (CPU) on the basis of the program installed in the external memory.

Then, the switch server 31 transmits a control signal for changing over the connection of the switch of the seesaw switching box (SSWB) from SW1 to SW2 to the switch control section 32 while sending out the formed data to the buffer 33 which is in the packet buffer mode.

Upon receiving the control signal from the switch server 31, the switch control section 32 sends out the control signal for changing over the connection of the switch from SW1 to SW2 to the seesaw switching box (SSWB) 35. Subsequently, the switch control section 32 sends out a control signal for setting the state of the buffer 33 to the packet through mode to the buffer 33 and receives a control signal indicative of a notice that the state was changed to the packet through mode from the buffer 33.

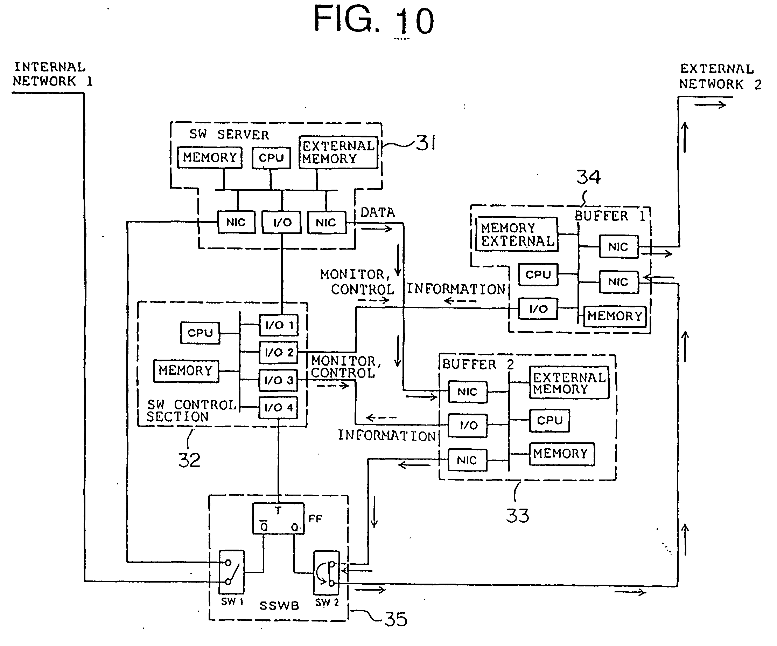

Then, as shown in Fig. 10, data is inputted to the buffer 34 that is in the packet buffer mode through the switch (SW2) of the seesaw switching box (SSWB) 35 from the buffer 33.

Upon completion of transmitting the data, the buffer 33 sends out the notice signal (buffer empty signal) to the switch control section 32. Upon receiving the buffer empty signal, the switch control section 32 sends out a control signal for setting the state to the packet through mode to the buffer 34 that is in the packet buffer mode.

Upon receiving the control signal, the buffer 34 sets its state to the packet through mode and returns a control signal indicative of a notice that the state was changed to the packet through mode to the switch control section 32.

In this way, the data is transmitted to the external network 2.

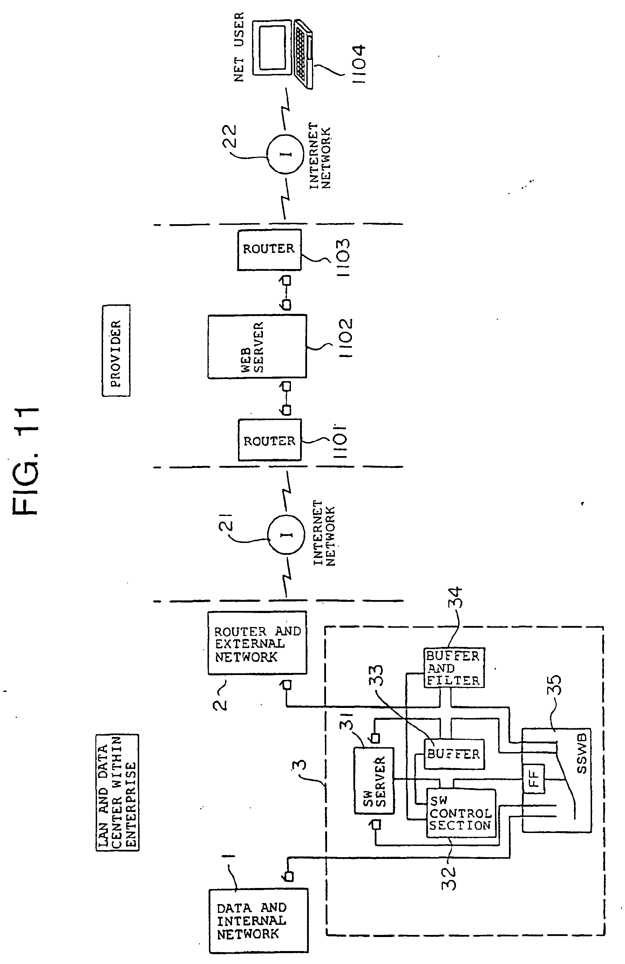

Then, an applied example of this embodiment will be described with reference to Fig. 11.

In the figure, it is assumed that a certification act of an individual ID and the user attribute in internet shopping is requested from a web server 1102 located in a provider to a data server (internal network 1) located within an enterprise.

The external network 2 is connected to the internet 21, and the internet 21 is connected to the web server 1102 of the provider through a rooter 1101. The web server 1102 is connected to the internet 22 through the rooter 1103, and the internet 22 is connected with a user terminal 1104.

In the figure, the certification results are outputted as data from the internal network 1 on the basis of the certification request from the external network 2, and this operation is realized as described above with reference to Figs. 7 to 10.

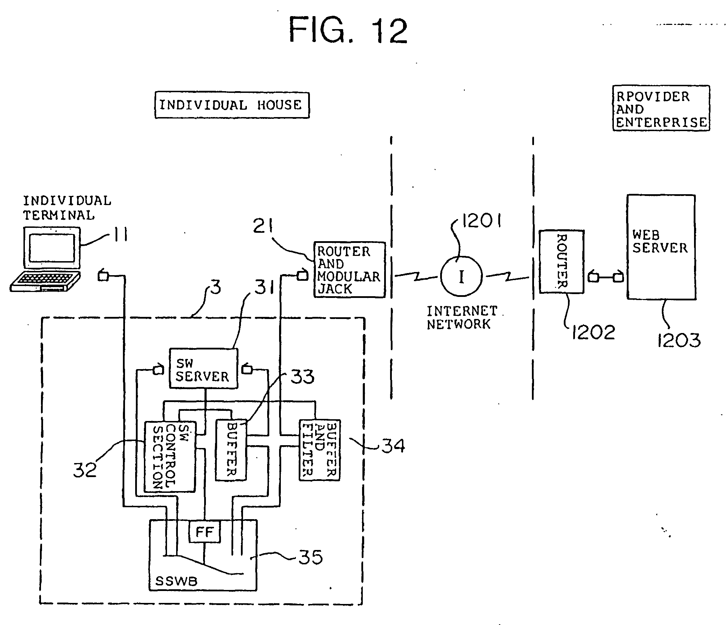

Fig. 12 shows a structure in which the terminal device 21 located within an individual home corresponding to the internal network, transmits a download request of music data to a web server 1203 of the provider, which is the external network, and receives the music data from the web server 1203 in response to that request.

In the figure, the terminal device 21 is connected to the internet 1201 through the router and a modular jack 21, and the internet 1201 is connected to the web server 1203 of the provider though the router 1202. The music data for music delivery is stored in the web server 1203.

In the music delivery service, the transmission of the music data is requested from the individual terminal device 11 to the web server 1203. When the request is received by the web server 1203 and certified by a method not shown, the music data is received by the control terminal 3 from the web server 1203 through the router and the modular jack 21 on the internet 1201. A procedure from originating the request to receiving the data since can be realized as described above with reference to Figs. 7 to 10. In the description of Figs. 7 to 10, "request" and "data" should be changed to "data" and "request", respectively.

Also, in addition to the above-described applied examples, the present system can be applied to a LAN within an enterprise, a provider, a data center business, a personal PC terminal and so on. That is, the present invention is not limited to the above-described embodiments and their applied examples, but can be applied to any portion on the network and can maintain the internal security for each of network.

The foregoing description of the preferred embodiments of the invention has been presented for purposes of illustration and description. It is not intended to be exhaustive or to limit the invention to the precise form disclosed, and modifications and variations are possible in light of the above teachings or may be acquired from practice of the invention. The embodiments were chosen and described in order to explain the principles of the invention and its practical application to enable one skilled in the art to utilize the invention in various embodiments and with various modifications as are suited to the particular use contemplated. It is intended that the scope of the invention be defined by the claims appended hereto, and their equivalents.

Where technical features mentioned in any claim are followed by reference signs, those reference signs have been included for the sole purpose of increasing the intelligibility of the claims.

## Claims

1. A switch connection control apparatus (3) for physically separating an internal network (1) and an external network (2), which is interposed between said external network (2) and said internal network (1), comprising:
a first switch for short-circuiting and releasing the external network (2);
a second switch for short-circuiting and releasing the internal network (1);
**characterized in that** it further comprises a switch control section (32) placed out of contact with a data signal path connecting the external network (2) and the internal network (1), said switch control section (32) outputs a control signal for short-circuiting either said first or said second switch and for simultaneously releasing the other one of said first and second switch, said first and second switches operating in a seesaw type for short-circuiting and releasing the external network (2) and the internal network (1) respectively.

2. The switch connection control apparatus (3) as claimed in claim 1, further comprising:
a main control device (31) for conducting a certification and control of data;
a first buffer (34) connected to the external network (2); and
a second buffer (33) connected to said main control device (31) for storing a request or data;
wherein said first switch is for short-circuiting and releasing said first buffer (34) and said second buffer (33) on the external network (2);
said second switch is for short-circuiting and releasing said main control device (31) and the internal network (1); and
said switch control section (32) outputs the control signal in accordance with the main control device (31).

3. The switch connection control apparatus (3) as claimed in claim 2, wherein said first buffer (34) includes certification means for verifying a correctness of the request or data from the external network (2).

4. The switch connection control apparatus (3) as claimed in claim 2, wherein said main control device (31) includes certification means for verifying a correctness of the request or data from the internal network (1).

5. The switch connection control apparatus (3) as claimed in claim 2, further comprising:
a third buffer (37) disposed between said main control device (31) and said second switch for storing a request or data; and
a fourth buffer (36) disposed between said internal network (1) and said second switch for storing a request or data.

6. The switch connection control apparatus (3) as claimed in claim 5, wherein said fourth buffer (36) includes filtering means for judging wheter unjust data exists in the request from the internal network (1).

## Revendications

1. Un dispositif de contrôle de connexion de commutation (3), pour séparer physiquement un réseau interne (1) et un réseau externe (2), interposé entre ledit réseau externe (2) et ledit réseau interne (1), comprenant :
un premier commutateur, pour produire la mise en court-circuit et la connexion du réseau externe (2) ;
un deuxième commutateur, pour produire la mise en court-circuit et la déconnexion du réseau interne (1) ;
**caractérisé en ce qu'**il comprend en outre une section de contrôle de commutation (32) placée hors de contact d'un chemin de signal de données connectant le réseau externe (2) et le réseau interne (1), ladite section de contrôle de connexion (32) produisant un signal de commande, pour produire la mise en court-circuit soit dudit premier, soit dudit deuxième commutateur et pour, simultanément, déconnecter l'autre dudit premier et dudit deuxième commutateur, lesdits premier et deuxième commutateurs fonctionnant en un type de bascule, pour produire la mise en court-circuit et la déconnexion du réseau externe (2) et du réseau interne (1), respectivement.

2. Le dispositif de contrôle de connexion de commutation (3) tel que revendiqué à la revendication 1, comprenant en outre :
un dispositif de contrôle principal (31), pour accomplir une certification et un contrôle de données ;
un premier tampon (34), connecté au réseau externe (2) ; et
un deuxième tampon (33), connecté audit dispositif de contrôle principal (31), pour stocker une requête ou des données ;
dans lequel ledit commutateur est prévu pour produire la mise en court-circuit et la déconnexion dudit premier tampon (34) et dudit deuxième tampon (33) sur le réseau externe (2) ;
ledit deuxième commutateur est prévu pour produire la mise en court-circuit et la déconnexion dudit dispositif de contrôle principal (31) et du réseau interne (1) ; et
ladite section de contrôle de commutation (32) produit le signal de contrôle en fonction du dispositif de contrôle principal (31).

3. Le dispositif de contrôle de connexion de commutation (3) tel que revendiqué à la revendication 2,
dans lequel ledit premier tampon (34) comprend des moyens de certification, pour vérifier l'exactitude de la requête ou des données venant du réseau externe (2).

4. Le dispositif de contrôle de connexion de commutation (3) tel que revendiqué à la revendication 2, dans lequel ledit dispositif de contrôle principal (31) comprend des moyens de certification, pour vérifier l'exactitude de la requête ou des données venant du réseau interne (1).

5. Le dispositif de contrôle de connexion de commutation (3) tel que revendiqué à la revendication 2, comprenant en outre :
un troisième tampon (37), disposé entre ledit dispositif de contrôle principal (31) et ledit deuxième commutateur, pour stocker une requête ou des données ; et
un quatrième tampon (36), disposé entre ledit réseau interne (1) et ledit deuxième commutateur, pour stocker une requête ou des données.

6. Le dispositif de contrôle de connexion de commutation (3) tel que revendiqué à la revendication 5, dans lequel ledit quatrième tampon (36) comprend des moyens de filtrage, pour apprécier s'il y a présence de données injustes dans la requête issues du réseau interne (1).

## Patentansprüche

1. Eine Schalter-Schaltungssteuerungsvorrichtung (3) zum physikalischen Trennen eines internen Netzwerks (1) und eines externen Netzwerks (2), welche zwischen dem externen Netzwerk (2) und dem internen Netzwerk (1) zwischengeschaltet ist, welche folgendes umfasst:
einen ersten Schalter zum Kurzschließen und Freigeben des externen Netzwerks (2);
einen zweiten Schalter zum Kurzschließen und Freigeben des internen Netzwerks (1);
**dadurch gekennzeichnet, dass** sie weiter einen Schalter-Steuerungsabschnitt (32) umfasst, der ohne Kontakt mit einem Datensignalweg, der das externe Netzwerk (2) und das interne Netzwerk (1) verbindet, angeordnet ist, wobei der Schalter-Steuerungsabschnitt (32) ein Steuersignal zum Kurzschließen entweder des ersten oder des zweiten Schalters ausgibt und zum gleichzeitigen Freigeben des anderen des ersten und zweiten Schalters, wobei der erste und zweite Schalter auf eine Wippenart zum Kurzschließen und Freigeben des externen Netzwerks (2) bzw. des internen Netzwerks (1) arbeiten.

2. Die Schalter-Schaltungssteuerungsvorrichtung (3) wie in Anspruch 1 beansprucht, die weiter folgendes umfasst:
eine Hauptsteuerungsvorrichtung (31) zum Ausführen einer Zertifizierung und Steuerung von Daten;
einen ersten Puffer (34), der mit dem externen Netzwerk (2) verbunden ist; und
einen zweiten Puffer (33), der mit der Hauptsteuerungsvorrichtung (31) verbunden ist, zum Speichern einer Anforderung oder von Daten;
worin der erste Schalter zum Kurzschließen und Freigeben des ersten Puffers (34) und des zweiten Puffers (33) auf dem externen Netzwerk (2) ist;
der zweite Schalter zum Kurzschließen und Freigeben der Hauptsteuerungsvorrichtung (31) und des internen Netzwerks (1) ist; und
der Schalter-Steuerungsabschnitt (32) das Steuersignal gemäß der Hauptsteuerungsvorrichtung (31) ausgibt.

3. Die Schalter-Schaltungssteuerungsvorrichtung (3) wie in Anspruch 2 beansprucht, worin der erste Puffer (34) Zertifizierungsmittel einschließt zum Verifizieren einer Richtigkeit der Anforderung oder von Daten von dem externen Netzwerk (2).

4. Die Schalter-Schaltungssteuerungsvorrichtung (3) wie in Anspruch 2 definiert, worin die Hauptsteuerungsvorrichtung (31) Zertifizierungsmittel einschließt zum Verifizieren einer Richtigkeit der Anforderung oder von Daten von dem internen Netzwerk (1).

5. Die Schalter-Schaltungssteuerungsvorrichtung (3) wie in Anspruch 2 definiert, die weiter folgendes umfasst:
einen dritten Puffer (37), der zwischen der Hauptsteuerungsvorrichtung (31) und dem zweitem Schalter angeordnet ist, zum Speichern einer Anforderung oder von Daten; und
einen vierten Puffer (36), der zwischen dem internen Netzwerk (1) und dem zweiten Schalter angeordnet ist, zum Speichern einer Anforderung oder von Daten.

6. Die Schalter-Schaltungssteuerungsvorrichtung (3) wie in Anspruch 5 beansprucht, worin der vierte Puffer (36) Filtermittel einschließt zum Beurteilen, ob unrechtmäßige Daten in der Anforderung von dem internen Netzwerk (1) vorhanden sind.
